Europäisches Patentamt

European Patent Office

Office européen des brevets

(19)

(11) Veröffentlichungsnummer: **0 201 712 B1**

(12) **EUROPÄISCHE PATENTSCHRIFT**

(45) Veröffentlichungstag der Patentschrift: 05.06.91

(51) Int. Cl.5: **G01N 27/30**, G01N 27/28

(21) Anmeldenummer: 86104716.5

(22) Anmeldetag: 07.04.86

Die Akte enthält technische Angaben, die nach dem Eingang der Anmeldung eingereicht wurden und die nicht in dieser Patentschrift enthalten sind.

(54) Verfahren zur Messung der Potentialdifferenz zwischen einer Probenflüssigkeit und einem Referenzelektrolyten sowie Vorrichtung zur Messung der Ionenkonzentration in der Probenflüssigkeit.

(30) Priorität: 11.05.85 DE 3517131

(43) Veröffentlichungstag der Anmeldung:
20.11.86 Patentblatt 86/47

(45) Bekanntmachung des Hinweises auf die Patenterteilung:
05.06.91 Patentblatt 91/23

(84) Benannte Vertragsstaaten:
AT BE CH DE FR GB IT LI NL SE

(56) Entgegenhaltungen:
EP-A- 0 105 434    DE-A- 2 612 428
DE-B- 2 559 816    DE-U- 7 621 131
GB-A- 2 148 511    US-A- 3 956 094
US-A- 4 028 197

JOURNAL OF THE ELECTROCHEMICAL SOCIETY, Band 127, Nr. 3, März 1980, Seiten 632-639,; M.C.H. McKUBRE et al.: "The rotating cylinder-collector electrode (RCCE)"

(73) Patentinhaber: **EPPENDORF-NETHELER-HINZ GMBH**
**Barkhausenweg 1**
**W-2000 Hamburg 63(DE)**

(72) Erfinder: **Hofmeier, Gerhard**
**Grönkamp 29**
**W-2000 Hamburg 65(DE)**
Erfinder: **Petersen, Karl**
**Grützmühlenweg 39**
**W-2000 Hamburg 63(DE)**
Erfinder: **Schröder, Wolfgang**
**Hochallee 120**
**W-2000 Hamburg 13(DE)**

(74) Vertreter: **UEXKÜLL & STOLBERG Patentanwälte**
**Beselerstrasse 4**
**W-2000 Hamburg 52(DE)**

## Beschreibung

Die Erfindung bezieht sich auf ein Verfahren zur Messung der Potentialdifferenz zwischen einem durch Pumpen geförderten Strom Probenflüssigkeit und einem Referenzelektrolyten, bei dem der Probenstrom in Berührung mit einer Referenzelektrode gebracht wird, die einen sich im wesentlichen quer zum Probenstrom erstreckenden, mit seinem einen Ende in diesen mündenden Kapillarkanal aufweist, in den über sein anderes Ende Referenzelektrolyt eingespeist wird, der mit einem Referenzelement der Referenzelektrode gekoppelt ist, das elektrisch mit einer Aus = werteschaltung verbunden ist.

Ferner betrifft die Erfindung eine Vorrichtung zur Messung der Ionenkonzentration in einer Probenflüssigkeit sowie eine Referenzelektrode zur Durchführung des Verfahrens und/oder für die Vorrichtung.

Bei einem bekannten Verfahren zur Messung der Ionenkonzentration in einer Probenflüssigkeit (EP-A- 0 105 434) befindet sich der Referenzelektrolyt in einem Behälter oberhalb des Kanals, durch den die Probenflüssigkeit gepumpt wird, und der Innenraum des Behälters ist mit dem Kanal für die Probenflüssigkeit über einen Kapillarkanal verbunden, durch den hindurch Referenzelektrolyt unter Einfluß der Schwerkraft aus dem Behälter in den Probenkanal gelangt. Mittels eines in den Elektrolytbehälter eintauchenden Referenzelementes wird die Potentialdifferenz zwischen Probenflüssigkeit und Referenzelektrolyt gemessen, um eine Bezugsgröße für die mittels der oder den ionenselektiven Elektroden gemessenen, die Ionenkonzentrationen kennzeichnenden Potentiale zu erhalten.

Das bekannte Verfahren hat den Nachteil, daß dauernd, also auch wenn keine Messung einer Ionenkonzentration vorgenommen wird, Referenzelektrolyt über den Kapillarkanal vom Elektrolytbehälter in den Probenkanal eintritt. Dies hat jedoch einen starken Verlust an Referenzelektrolyt zur Folge, falls nicht der Kapillarkanal einen extrem kleinen Querschnitt aufweist. Ein kleiner Querschnitt vergrößert jedoch erheblich die Gefahr des Verstopfens des Kapillarkanals, und zum Auswechseln des den Kapillarkanal aufweisenden Kapillarenkörpers muß bei der bekannten Anordnung der Elektrolytbehälter entleert werden. Schließlich läßt sich bei dem bekannten System nur ein solcher Aufbau wählen, bei dem der Elektrolytbehälter oberhalb des Probenkanals angeordnet ist, weil nur dann der Referenzelektrolyt durch Schwerkraft in den Probenkanal gelangen kann.

Es ist Aufgabe der Erfindung, bei einem Verfahren zur Messung der Potentialdifferenz zwischen einer Probenflüssigkeit und einem Referenzelektrolyten den Verbrauch an Referenzelektrolyt zu vermindern, hinaus die Gefahr eines Verstopfens des Elektrolytkanals zu verringern und aus dem Referenzelektrolyt ausgasende Bestandteile u.a. im Bereich des Referenzelementes kontinuierlich zu entfernen.

Zur Lösung dieser Aufgabe wird ein Verfahren der eingangs erwähnten Art erfindungsgemäß derart ausgestaltet, daß ein Strom des Referenzelektrolyten quer zum Kapillarkanal über dessen anderes Ende gepumpt wird, wobei sich die Kopplung mit dem Referenzelement ergibt, und daß das Pumpen des Stroms des Referenzelektrolyten vor dem Messen der Potentialdifferenz begonnen wird.

Bei dem erfindungsgemäßen Verfahren, das beispielsweise in Zusammenhang mit der Messung der Ionenkonzentration in der Probenflüssigkeit, aber auch als Eichverfahren angewendet werden kann, wird der Referenzelektrolyt vor Beginn des Meßvorgangs und vorzugsweise während des gesamten Meßvorganges durch den Kapillarkanal befördert, so daß aus ihm ausgasende Bestandteile kontinuierlich entfernt werden und die Messung nicht verfälschen können. Da nur während des Meßvorgangs Referenzelektrolyt zu fließen braucht, wird der Verbrauch an Referenzelektrolyt deutlich verringert. Der Kapillarkanal braucht auch nicht in Richtung auf die Erzielung eines geringen Verbrauchs an Referenzelektrolyt dimensioniert zu werden, so daß bei ihm die Gefahr des Verstopfens verringert ist. Ferner braucht der Elektrolytkanal nicht oberhalb des Proben- oder Meßkanals angeordnet zu werden, da die Förderung von Referenzelektrolyt zum Kapillarkanal nicht durch Schwerkraft, sondern durch Pumpen stattfindet.

Um auf einfache Weise einen bevorzugten gleichzeitigen Beginn und ein bevorzugtes gleichzeitiges Beenden des Pumpens von Probenflüssigkeit und Referenzelektrolyt zu erreichen, können der Strom der Probenflüssigkeit und der Strom des Referenzelektrolyten durch Schläuche geführt werden, die in Eingriff mit dem Drehkolben einer Schlauchpumpe stehen und in axialer Richtung des Drehkolbens nebeneinander angeordnet sind.

Bei der Messung der Ionenkonzentration in der Probenflüssigkeit erfolgt üblicherweise eine Förderung von Probenflüssigkeit zu einer ionenselektiven Elektrode bzw. zu mehreren ionenselektiven Elektroden, um dann die Probenflüssigkeit zur Durchführung der Messung längere Zeit in Berührung mit der ionenselektiven Elektrode bzw. den ionenselektiven Elektroden zu halten, ohne daß eine weitere Förderung an Probenflüssigkeit stattfindet. Um auch während dieser Meßzeit eine ausreichende Zufuhr an Referenzelektrolyt zum Kapillarkanal sicherzustellen, kann der Strom des Referenzelektrolyten in einen Druckspeicher gepumpt werden, der dem anderen Ende des Kapillarkanals nachgeordnet ist und aus dem der Referenzelektrolyt vorzugsweise über eine Drossel nur langsam abfließen kann. Dadurch wird der Druck des Referenzelektrolyten über dem anderen Ende des Kapillarkanals über eine längere Zeitspanne, etwa den Meßzeitraum aufrechterhalten.

Die Erfindung betrifft ferner eine Vorrichtung zur Messung der Ionenkonzentration in einer Probenflüssigkeit mit einem Strömungskanal für die Förderung von Probenflüssigkeit, in dessen Wandung mindestens eine ionenselektive Elektrode sowie ein Ende eines einen Teil einer Referenzelektrode bildenden Kapillarkanals vorgesehen ist, dessen anderes Ende mit einem Bereich zur Aufnahme von Referenzelektrolyt verbunden ist, der mit dem mit einer Auswerteschaltung verbundenen Referenzelement der Referenzelektrode gekoppelt ist. Diese Vorrichtung zeichnet sich erfindungsgemäß dadurch aus, daß der Bereich zur Aufnahme von Referenzelektrolyt ein quer zur Längserstreckung des Kapillarkanals verlaufender Elektrolytkanal ist, in dessen Verlauf sich das Referenzelement befindet und dessen eines Ende mit einer Schlauchpumpe verbunden ist, an die auch der Strömungskanal für die Probenflüssigkeit angeschlossen ist, und daß das andere Ende des Elektrolytkanals mit einem Druckspeicher verbunden ist.

Der Druckspeicher besteht vorzugsweise aus einem elastisch aufweitbaren Schlauch. Dem Druckspeicher ist beispielsweise eine Drossel, etwa ein wendelförmig aufgewickelter, unelastischer Schlauch nachgeschaltet, dessen Innenquerschnitt wesentlich kleiner als, d.h. maximal halb so groß wie der Innenquerschnitt des schlauchförmigen Druckspeichers ist.

Zur Durchführung des erfindungsgemäßen Verfahrens und zur Verwendung in der erfindungsgemäßen Vorrichtung kann eine Referenzelektrode dienen, die gekennzeichnet ist durch einen in einem Kapillarträger angeordneten, einen Kapillarkanal aufweisenden Kapillarenkörper, dessen eines Ende sich in einen quer zur Längsachse des Kapillarkanals verlaufenden Elektrolytkanal erstreckt, sowie durch ein gegenüber dem einen Ende des Kapillarkanals und an der diesem abgewandten Seite des Elektrolytkanals vorgesehenes Referenzelement, das mit einer Auswerteschaltung elektrisch verbindbar ist.

Durch die T-förmige Anordnung von Kapillarkanal und Elektrolytkanal sowie durch das Pumpen von Referenzelektrolyt durch den Elektrolytkanal wird sichergestellt, daß sich im Elektrolytkanal im Bereich des einen Endes des Kapillarkanals keine Luftblasen festsetzen können, die die Zufuhr von Referenzelektrolyt zum Kapillarkanal und damit die elektrische Verbindung zwischen Proben- oder Meßkanal und Referenzelement unterbrechen könnten. Weiterhin werden im Bereich des Referenzelementes evtl. aus dem Referenzelektrolyt ausgasende Bestandteile, die zu fehlerhaften Bezugspotentialmessungen führen können, kontinuierlich entfernt.

Es hat sich gezeigt, daß bei Verwendung eines strömenden Referenzelektrolyten vom frei umfließbaren Referenzelement Beschichtungen abgelöst werden können, so daß die Referenzelektrode unbrauchbar wird. Um diese Schwierigkeiten zu vermeiden, kann das Referenzelement gegenüber dem Elektrolytkanal, wie beispielsweise aus der DE-B- 33 05 962 bekannt, mit einer ionenselektiven Membran abgedeckt sein, etwa einer chloridselektiven Membran, wenn das Referenzelement aus einem mit Silberchlorid beschichteten Silberdraht besteht und der Referenzelektrolyt eine Kaliumchloridlösung ist.

Durch das Abdecken des Referenzelementes mit einer entsprechend ausgebildeten ionenselektiven Membran kommt das Referenzelement nicht in Berührung mit dem durch den Elektrolytkanal gepumpten Referenzelektrolyten, jedoch können Ionen vom Referenzelektrolyten durch die Membran hindurch zum Referenzelement gelangen.

Um bei verstopftem Kapillarkanal den Kapillarenkörper einfach austauschen zu können, kann der Kapillarträger in einen den Elektrolytkanal aufweisenden und das Referenzelement aufnehmenden Trägerkörper eingeschraubt sein, so daß er sich leicht aus diesem lösen und durch einen anderen Kapillarträger ersetzen läßt. Vorzugsweise ist jedoch der Kapillarenkörper lösbar im Kapillarträger gehalten und daher austauschbar, so daß sich der Kapillarträger nach dem Einsetzen eines neuen Kapillarenkörpers wieder in den Trägerkörper einschrauben läßt.

Die Erfindung wird im folgenden anhand der Figuren näher erläutert.

Figur 1  zeigt in einer Prinzipdarstellung den Aufbau einer Vorrichtung zur Messung der Ionenkonzentration in einer Probenflüssigkeit.

Figur 2  zeigt einen Schnitt durch eine Referenzelektrode.

Figur 3  zeigt teilweise als Seitenansicht und teilweise im Schnitt die Referenzelektrode aus Figur 2.

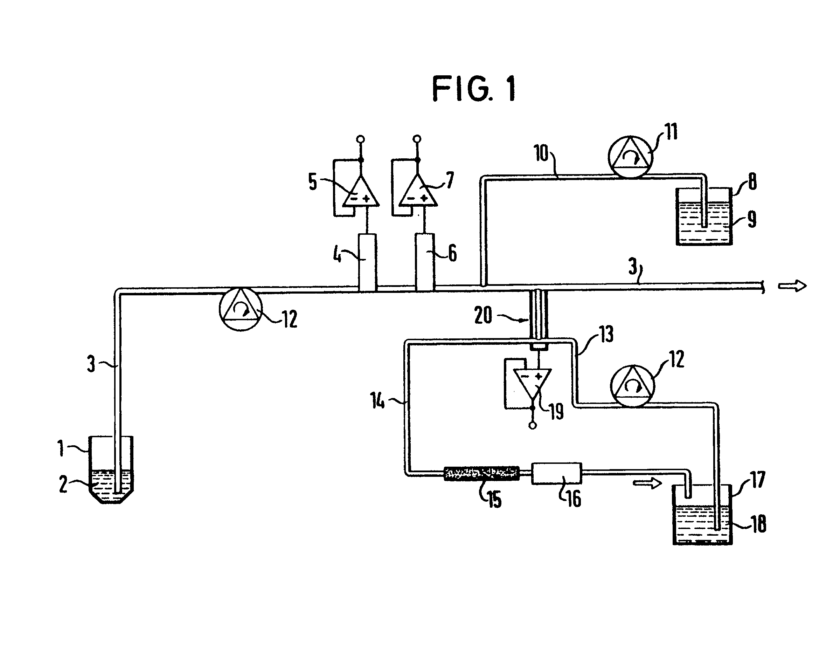

Die in Figur 1 dargestellte Vorrichtung enthält einen Probenbehälter 1 mit der zu untersuchenden Probenflüssigkeit 2. Vom Probenbehälter verläuft eine Leitung bzw. ein Meßkanal 3, in die bzw. in den zwei ionenselektive Elektroden 4 und 6 eingesetzt sind, die mit Verstärkern 5 und 7 verbunden sind. Die Elektrode 4 ist beispielsweise selektiv für Kaliumionen und die Elektrode 6 z. B. für Chlorionen.

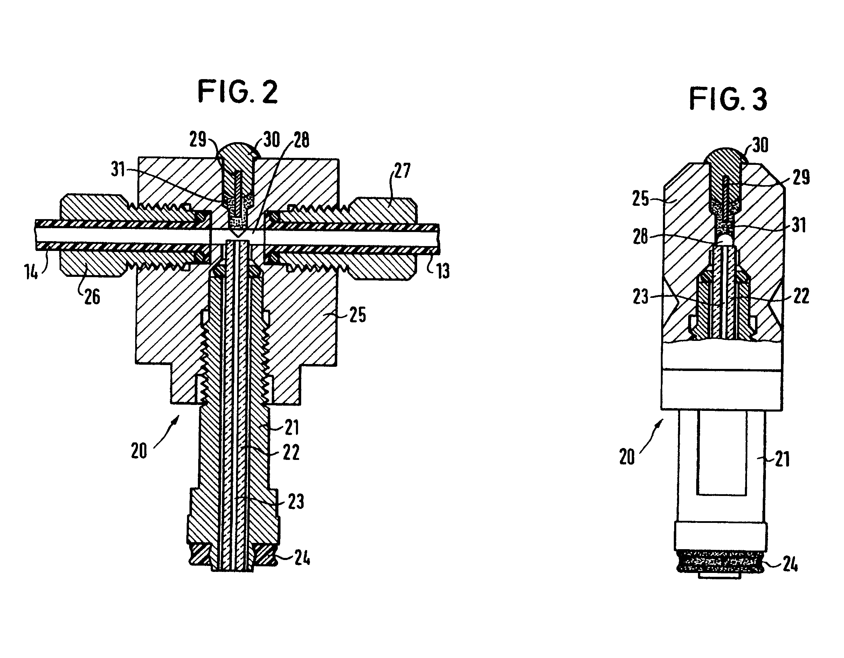

Ferner ist an den Meßkanal 3 eine Referenzelektrode 20 mit einem den Verstärkern 5 und 7 entsprechenden Verstärker 19 angeschlossen. Der Aufbau der Referenzelektrode wird später in Zusammenhang mit den Figuren 2 und 3 beschrieben werden.

Am Meßkanal 3 liegt zwischen Elektrode 6 und Referenzelektrode 20 eine Spülleitung 10, die mit einem Behälter 8 für Spülflüssigkeit 9 verbunden ist. Um Spülflüssigkeit vom Behälter 8 in den Meßkanal 3 zu pumpen, ist eine Schlauchpumpe 11 vorgesehen, wie sie beispielsweise in der US-PS 4 366 040 angezeigt ist. Die Spülflüssigkeit dient dazu, vor Durchführung einer Messung aus dem Meßkanal 3 Reste von Probenflüssigkeit einer vorhergehenden Messung zu entfernen.

An das dem Meßkanal 3 abgewandte Ende der Referenzelektrode 20 ist eine Leitung 13, 14 angeschlossen, deren Abschnitt 13 sich in einen Behälter 17 für Referenzelektrolyt 18, etwa eine 2-molare Kaliumchloridlösung erstreckt. Die Leitung 14 verläuft in Fortsetzung der Leitung 13 von der Referenzelektrode 20 zurück zum Behälter 17, und in ihr befindet sich ein Druckspeicher 15 und eine Drossel 16. Der Druckspeicher 15 besteht aus einem Stück elastisch aufweitbarem Schlauch, etwa aus Siliconkautschuk. Die dem Druckspeicher 15 nachgeordnete Drossel 16 ist ein wendelförmig aufgewickelter, unelastischer Schlauch, dessen Innenquerschnitt maximal halb so groß wie der Innenquerschnitt des schlauchförmigen Druckspeichers 15 ist. Dadurch weitet unter Druck eintretender Referenzelektrolyt den Druckspeicher 15 auf, und der Referenzelektrolyt wird in ihm eine gewisse Zeit unter Druck gehalten, da er wegen des geringen Innenquerschnitts des unelastischen Schlauches der Drossel 16 nur sehr langsam aus dem Druckspeicher 15 in Richtung auf den Behälter 17 austreten kann.

Zur Förderung von Probenflüssigkeit 2 und Referenzelektrolyt 18 dient eine einzige Schlauchpumpe 12, die in Figur 1 an zwei Stellen dargestellt ist, die jedoch entsprechend der Schlauchpumpe gemäß US-A- 4 366 040 aufgebaut sein kann und auf deren Drehkolben die Schläuche für die Probenflüssigkeit und den Referenzelektrolyten in axialer Richtung nebeneinander angeordnet sind. Wird daher der Drehkolben der Schlauchpumpe 12 gedreht, so beginnt gleichzeitig ein Ansaugen von Probenflüssigkeit 2 aus dem Behälter 1 in den Meßkanal 3 und ein Ansaugen von Referenzelektrolyt 18 aus dem Behälter 17 in die Leitung 13, 14 und den Kapillarkanal 23 (Figuren 2 und 3). Dieser Pumpvorgang wird so lange fortgesetzt, bis einerseits eine ausreichende Menge Probenflüssigkeit 2 in den Meßkanal 3 gesaugt ist, so daß diese Probenflüssigkeit in Berührung mit den ionenselektiven Elektroden 4 und 6 und der Referenzelektrode 20 steht, und andererseits durch Füllen des Druckspeichers 15 zwischen diesem und der Pumpe 12 in den Leitungen 13 und 14 ein solcher Druck aufgebaut ist, daß dieser bei Berücksichtigung des allmählichen Druckabbaus durch Austritt von Referenzelektrolyt aus dem Druckspeicher 15 über die Drossel 16 ausreichend lange aufrechterhalten wird, um die gewünschte Messung durchzuführen.

Die Referenzelektrode 20 kann in der in den Figuren 2 und 3 dargestellten Weise aufgebaut sein. Diese Referenzelektrode weist einen Trägerkörper 25 auf, in dem ein Elektrolytkanal 28 ausgebildet ist. Zur Verbindung des Elektrolytkanals 28 mit der Schlauchpumpe 12 ist die aus einem Schlauch bestehende Leitung 13 mittels einer Schlauchverschraubung 27 und unter Zwischenschaltung eines O-Ringes im Trägerkörper 25 befestigt, während die Verbindung zum Druckspeicher 15 über einen die Leitung 14 bildenden Schlauch hergestellt wird, der mittels einer Schlauchverschraubung 26 und unter Zwischenschaltung eines O-Ringes an der dem Schlauch 13 gegenüberliegenden Seite im Trägerkörper 25 befestigt ist. Wie dargestellt, verlaufen die Schläuche 13 und 14 im Bereich des Trägerkörpers 25 koaxial zueinander und koaxial zum Elektrolytkanal 28, wobei ihre lichten Durchmesser im wesentlichen gleich dem lichten Durchmesser des Elektrolytkanals 28 sind.

Quer zum Elektrolytkanal 28 ist in den Trägerkörper 25 ein Kapillarträger 21 eingeschraubt, in den ein Kapillarenkörper 22 eingesetzt ist, der üblicherweise aus Glas besteht und einen durchgehenden Kapillarkanal 23 aufweist. Der Kapillarenkörper 22 erstreckt sich bis in den Elektrolytkanal 28, so daß ein Ende des Kapillarkanals 23 in Berührung mit Referenzelektrolyt kommt, der durch den Elektrolytkanal 28 gepumpt wird. Auf das freie Ende des Kapillarträgers 21 ist ein Dichtring 24 aufgesetzt, und mit diesem Ende kann der Kapillarträger 21 mit einem entsprechenden Anschluß im Meßkanal 3 verbunden werden, um so das in Figur 2 untere Ende des Kapillarkanals 23 in Berührung mit Probenflüssigkeit 2 zu bringen, die durch den Meßkanal 3 gepumpt wird.

Senkrecht zum Elektrolytkanal 28, jedoch an der dem Kapillarkanal 23 gegenüberliegenden Seite ist in den Trägerkörper 25 ein Referenzelement 29 eingesetzt, das in einem Kontaktniet 30 fixiert ist. Das Referenzelement 29, das beispielsweise aus einem mit Silberchlorid beschichteten Silberdraht besteht, ist mit einer chloridselektiven Membran 31 abgedeckt, die an ihrer in den Figuren 2 und 3 unteren Seite entsprechend der Wandung des Elektrolytkanals 28 geformt ist (Figur 3), also dessen Querschnittsform nicht ändert. Die Membran 31 besteht bei einem Referenzelement aus mit Silberchlorid beschichtetem Silberdraht und bei Verwendung einer Kaliumchloridlösung als Referenzelektrolyt beispielsweise aus einer PVC-Matrix mit 82% PVC und 18% MTDDA-Cl, wie sie bereits für chloridselektive Elektroden Verwendung findet (Mikrochimica Acta (Wien), 1978 II, Seiten 235 bis 246).

Wird der Referenzelektrode 20 von der Pumpe 12 durch den Schlauch 13 Referenzelektrolyt zugeführt, strömt dieser durch den Elektrolytkanal 28 und den Schlauch 14, wobei infolge dieser Strömung und der Ausbildung des Elektrolytkanals 28 nicht die Gefahr besteht, daß an der sich in den Elektrolytkanal 28 erstreckenden Öffnung des Kapillarkanals 23 Luftblasen hängen bleiben. Infolge des Stroms von Referenzelektrolyt durch den Elektrolytkanal 28 gelangt Referenzelektrolyt in den Kapillarkanal 23 und wird bis zur Berührung mit der Probenflüssigkeit 2 im Meßkanal 3 befördert, so daß der Referenzelektrolyt die Membran 31 elektrisch mit der Probenflüssigkeit verbindet und bei entsprechender Beschaltung des Kontaktnietes 30 eine Ionenleitfähigkeit von der Probenflüssigkeit über die Membran 31 zum Referenzelement 29 und damit zur Auswerteschaltung gegeben ist, die ein Maß für die Potentialdifferenz zwischen Probenflüssigkeit und Referenzelektrolyt ist.

Falls der Kapillarkanal 23 im Betrieb verstopft, braucht lediglich die Referenzelektrode 20 von der Leitung 3 abgenommen zu werden, worauf dann der Kapillarträger 21 aus dem Trägerkörper 25 herausgeschraubt und der Kapillarenkörper 22 durch einen anderen Kapillarenkörper ersetzt wird.

## Ansprüche

1. Verfahren zur Messung der Potentialdifferenz zwischen einem durch Pumpen geförderten Strom Probenflüssigkeit (2) und einem Referenzelektrolyten (18), bei dem der Probenstrom in Berührung mit einer Referenzelektrode (20) gebracht wird, die einen sich im wesentlichen quer zum Probenstrom erstreckenden, mit seinem einen Ende in diesen mündenden Kapillarkanal (23) aufweist, in den über sein anderes Ende Referenzelektrolyt (18) eingespeist wird, der mit einem Referenzelement (29) der Referenzelektrode (20) gekoppelt ist, das elektrisch mit einer Auswerteschaltung verbunden ist, dadurch gekennzeichnet, daß ein Strom des Referenzelektrolyten (18) quer zum Kapillarkanal (23) über dessen anderes Ende gepumpt wird, wobei sich die Kopplung mit dem Referenzelement (29) ergibt, und daß das Pumpen des Stroms des Referenzelektrolyten (28) vor dem Messen der Potentialdifferenz begonnen wird.

2. Verfahren nach Anspruch 1, dadurch gekennzeichnet, daß das Pumpen des Stroms der Probenflüssigkeit (2) und des Stroms des Referenzelektrolyten (28) gleichzeitig beginnt und endet.

3. Verfahren nach Anspruch 2, dadurch gekennzeichnet, daß der Strom der Probenflüssigkeit (2) und der Strom des Referenzelektrolyten (18) durch Schläuche (3; 13, 14) geführt werden, die in Eingriff mit dem Drehkolben einer Schlauchpumpe (12) stehen und in axialer Richtung des Drehkolbens nebeneinander angeordnet sind.

4. Verfahren nach einem der Ansprüche 1 bis 3 zur Messung der Ionenkonzentration in der Probenflüssigkeit, dadurch gekennzeichnet, daß der Strom der Probenflüssigkeit (2) in Berührung mit mindestens einer ionenselektiven Elektrode (4; 6) gebracht wird und daß der Strom des Referenzelektrolyten (19) zur Aufrechterhaltung des Drucks über dem anderen Ende des Kapillarkanals (23) in einen Druckspeicher (15) gepumpt wird, aus dem er nur langsam abfließen kann.

5. Vorrichtung zur Messung der Ionenkonzentration in einer Probenflüssigkeit (2) mit einem Strömungskanal (3) für die Förderung von Probenflüssigkeit (2), in dessen Wandung mindestens eine ionenselektive Elektrode (4; 6) sowie ein Ende eines einen Teil einer Referenzelektrode (20) bildenden Kapillarkanals (23) vorgesehen ist, dessen anderes Ende mit einem Bereich zur Aufnahme von Referenzelektrolyt (18) verbunden ist, der mit dem mit einer Auswerteschaltung verbundenen Referenzelement (29) der Referenzelektrode (20) gekoppelt ist, dadurch gekennzeichnet, daß der Bereich zur Aufnahme von Referenzelektrolyt (18) ein quer zur Längserstreckung des Kapillarkanals (23) verlaufender Elektrolytkanal (28) ist, in dessen Verlauf sich das Referenzelement (29) befindet und dessen eines Ende mit einer Schlauchpumpe (12) verbunden ist, an die auch der Strömungskanal (3) für die Probenflüssigkeit (2) angeschlossen ist, und daß das andere Ende des Elektrolytkanals (28) mit einem Druckspeicher (15) verbunden ist.

6. Vorrichtung nach Anspruch 5, dadurch gekennzeichnet, daß der Druckspeicher (15) aus einem elastisch aufweitbaren Schlauch besteht, dem eine Drossel (16) nachgeschaltet ist.

7. Vorrichtung nach Anspruch 6, dadurch gekennzeichnet, daß die Drossel (16) aus einem wendelförmig aufgewickelten, unelastischen Schlauch besteht, dessen Innenquerschnitt wesentlich kleiner ist als der Innenquerschnitt des schlauchförmigen Druckspeichers (15).

8. Referenzelektrode zur Durchführung des Verfahrens gemäß einem der Ansprüche 1 bis 4 und/oder für eine Vorrichtung gemäß einem der Ansprüche 5 bis 7, gekennzeichnet durch einen in einem Kapillarträger (21) angeordneten, einen Kapillarkanal (23) aufweisenden Kapillarenkörper (22), dessen eines Ende sich in einen quer zur Längsachse des Kapillarkanals (23) verlaufenden Elektrolytkanal (28) erstreckt, sowie durch ein gegenüber dem einen Ende des Kapillarkanals (23) und an der diesem gegenüberliegenden Seite des Elektrolytkanals (28) vorgesehenes Referenzelement (29), das mit einer Auswerteschaltung elektrisch verbindbar ist.

9. Referenzelektrode nach Anspruch 8, dadurch gekennzeichnet, daß das Referenzelement (29) gegenüber dem Elektrolytkanal (28) vollständig mit einer ionenselektiven Membran (31) abgedeckt ist.

10. Referenzelektrode nach Anspruch 9, dadurch gekennzeichnet, daß das Referenzelement (29) aus einem mit Silberchlorid beschichteten Silberdraht besteht und die ionenselektive Membran eine chloridselektive Membran (31) ist.

11. Referenzelektrode nach einem der Ansprüche 8 bis 10, dadurch gekennzeichnet, daß der Kapillarträger (21) in einen den Elektrolytkanal (28) aufweisenden und das Referenzelement (29) aufnehmenden Trägerkörper (25) eingeschraubt ist.

12. Referenzelektrode nach Anspruch 11, dadurch gekennzeichnet, daß der Kapillarenkörper (22) lösbar im Kapillarträger (21) gehalten ist.

**Claims**

1. Process for measuring the potential difference between a flow of sample liquid (2) conveyed by pumping and a reference electrolyte (18), in which the sample flow is brought into contact with a reference electrode (20) which has a capillary tube (23) extending essentially transversely to, and with one end leading into, the sample flow, into which tube reference electrolyte (18) is fed via its other end, said electrolyte being coupled with a reference element (29) of the reference electrode (20), the former being electrically connected with an evaluation circuit, characterized in that a flow of the reference electrolyte (18) is pumped transversely to the capillary tube (23) via its other end, the coupling with the reference element (29) resulting, and that the pumping of the flow of the reference electrolyte (28) is commenced before the measurement of the potential difference.

2. Process according to claim 1, characterized in that the pumping of the flow of the sample liquid (2) and of the flow of the reference electrolyte (28) begins and ends simultaneously.

3. Process according to claim 2, characterized in that the flow of the sample liquid (2) and the flow of the reference electrolyte (18) are guided through tubes (3; 13, 14), which engage with the rotating piston of a tube pump (12) and are arranged alongside one another in the axial direction of the rotating piston.

4. Process according to one of claims 1 to 3 for measuring the ion concentration in the sample liquid, characterized in that the flow of the sample liquid (2) is brought into contact with at least one ion-selective electrode (4; 6) and that, in order to maintain the pressure, the flow of the reference electrolyte (19) is pumped via the other end of the capillary tube (23) into a pressure reservoir (15) from which it can only flow out slowly.

5. Device for measuring the ion concentration in a sample liquid (2) with a flow tube (3) for conveying sample liquid (2), said tube being provided on its walls with at least one ion-selective electrode (4; 6) as well as one end of a capillary tube (23) forming part of a reference electrode (20), the other end of said tube being connected with an area for receiving reference electrolyte (18), said area being coupled with the reference element (29), connected to an evaluation circuit, of the reference electrode (20), characterized in that the area for receiving reference electrolyte (18) is an electrolyte tube (28) running transversely to the longitudinal extension of the capillary tube (23), in whose path the reference element (29) is located and one end of which is connected to a tube pump (12), to which the flow tube (3) for the sample liquid (2) is likewise attached, and that the other end of the electrolyte tube (28) is connected to a pressure reservoir (15).

6. Device according to claim 5, characterized in that the pressure reservoir (15) consists of an elastically stretchable tube, downstream from which a choke (16) is connected.

7. Device according to claim 6, characterized in that the choke (16) consists of an inelastic, helically wound tube whose inner cross-section is considerably smaller than the inner cross-section of the tubular pressure reservoir (15).

8. Reference electrode for implementing the process according to one of claims 1 to 4 and/or for a device according to one of claims 5 to 7, characterized by a capillary body (22) housed in a capillary support (21) and displaying a capillary tube (23), one end of which extends into an electrolyte tube (28) running transversely to the longitudinal axis of the capillary tube (23), as well as by a reference element (29), provided opposite one end of the capillary tube (23) and on the side of the electrolyte tube (28) lying opposite same, which is electrically connectable to an evaluation circuit.

9. Reference electrode according to claim 8, characterized in that the reference element (29) opposite the electrolyte tube (28) is completely covered with an ion-selective membrane (31).

10. Reference electrode according to claim 9, characterized in that the reference element (29) consists of a silver wire coated with silver chloride and the ion-selective membrane is a chloride-selective membrane (31).

11. Reference electrode according to one of claims 8 to 10, characterized in that the capillary support (21) is screwed into a support (25) which displays the electrolyte tube (28) and receives the reference element (29).

12. Reference electrode according to claim 11, characterized in that the capillary body (22) is held detachably in the capillary support (21).

## Revendications

1. Procédé pour mesurer la différence de potentiel entre un écoulement, entraîné par une pompe, d'un échantillon liquide (2) et un électrolyte de référence (18), et selon lequel l'écoulement de l'échantillon est amené en contact avec une électrode de référence (20) qui possède un canal capillaire (23), qui s'étend essentiellement transversalement par rapport à l'écoulement de l'échantillon, pénètre par l'une de ses extrémités dans ce dernier, reçoit au niveau de son autre extrémité, l'électrolyte de référence (18), et est accouplé à un élément de référence (29) de l'électrode de référence (20), qui est raccordé électriquement à un circuit d'évaluation, caractérisé en ce qu'un écoulement de l'électrolyte de référence (18) est entraîné par pompage transversalement par rapport au canal capillaire (23), par l'intermédiaire de l'autre extrémité de ce canal, ce qui établit le couplage avec l'élément de référence (29), et que le pompage de l'écoulement de l'électrolyte de référence (18) commence avant la mesure de la différence de potentiel.

2. Procédé selon la revendication 1, caractérisé en ce que le pompage de l'écoulement de l'échantillon liquide (2) et le pompage de l'écoulement de l'électrolyte de référence (18) commencent et se terminent simultanément.

3. Procédé selon la revendication 2, caractérisé en ce que l'écoulement de l'échantillon liquide (2) et l'écoulement de l'électrolyte de référence (18) sont guidés dans des tuyaux (3;13,14), qui coopèrent avec le piston rotatif d'une pompe à tuyau (12) et sont disposés côte-à-côte dans la direction axiale du piston rotatif.

4. Procédé selon l'une des revendications 1 à 3 pour la mesure de la concentration ionique dans l'échantillon liquide, caractérisé en ce que l'écoulement de l'échantillon liquide (2) est amené en contact avec au moins une électrode (4;6) sélective du point de vue des ions et que, pour le maintien de la pression, l'écoulement de l'électrolyte de référence (18) est entraîné par pompage, par l'intermédiaire de l'autre extrémité du canal capillaire (23), dans un accumulateur de pression (15), d'ou il peut s'évacuer seulement lentement.

5. Dispositif pour mesurer la concentration ionique dans un échantillon liquide (2), comportant un canal d'écoulement (3) servant à entraîner l'échantillon liquide (2) et dans la paroi duquel sont prévues au moins une électrode (4;6) sélective du point de vue des ions ainsi qu'une extrémité d'un canal capillaire (23), qui forme une partie d'une électrode de référence (20) et dont l'autre extrémité est reliée a une zone servant à recevoir l'électrolyte de référence (18), qui est accouplée à l'élément de référence (29), relié à un circuit d'évaluation, de l'électrode de référence (20), caractérisé en ce que la zone servant à recevoir l'électrolyte de référence (18) est un canal (28) de circulation de l'électrolyte qui s'étend transversalement par rapport à l'étendue longitudinale du canal capillaire (23) et dans lequel est situé l'élément de référence (29) et dont une extrémité est raccordée à une pompe à tuyau (12), à laquelle est également raccordé le canal d'écoulement (3) pour l'échantillon liquide (2), et que l'autre extrémité du canal (28) de circulation de l'électrolyte est raccordée à un accumulateur de pression (15).

6. Dispositif selon la revendication 5, caractérisé en ce que l'accumulateur de pression (15) est constitué par un tuyau pouvant être dilaté élastiquement, en aval duquel est installé un étranglement (16).

7. Dispositif selon la revendication 6, caractérisé en ce que l'étranglement (16) est constitué par un tuyau non élastique, enroulé sous une forme hélicoïdale et dont la section transversale intérieure est nettement plus petite que la section transversale intérieure de l'accumulateur de pression (15) en forme de tuyau.

8. Électrode de référence pour la mise en oeuvre du procédé selon l'une des revendications 1 à 4 et/ou pour un dispositif selon l'une des revendications 5 à 7, caractérisée par un corps capillaire (22), qui est disposé dans un support capillaire (21) et comporte un canal capillaire (23) et dont une extrémité pénètre dans un canal (28) de circulation de l'électrolyte, qui est disposé transversalement par rapport à l'axe longitudinal du canal capillaire (23), et par un élément de référence (29) prévu en vis-à-vis d'une extrémité du canal capillaire (23) et sur le côté, situé à l'opposé de ce canal, du canal (28) de circulation de l'électrolyte et pouvant être raccordé électriquement à un circuit d'évaluation.

9. Électrode de référence selon la revendication 8, caractérisée en ce que l'élément de référence (29) est séparé du canal (28) de circulation d'électrolyte, en étant complètement recouvert par une membrane (31) sélective du point de vue des ions.

10. Électrode de référence selon la revendication 9, caractérisée en ce que l'élément de référence (29) est constitué par un fil d'argent recouvert de chlorure d'argent et que la membrane sélective du point de vue des ions est une membrane (31) sélective du point de vue des ions chlorure.

11. Électrode de référence selon l'une des revendications 8 à 10, caractérisée en ce que le support capillaire (21) est vissé dans un corps de support (25) qui possède un canal (28) de circulation de l'électrolyte et loge l'élément de référence (29).

12. Électrolyte de référence selon la revendication 11, caractérisé en ce que le corps capillaire (22) est maintenu de façon amovible dans le support capillaire (21).

FIG. 1

EP 0 201 712 B1

FIG. 3

FIG. 2

10